# EUROPEAN PATENT APPLICATION

(11) **EP 2 267 321 A1**
(43) Date of publication of application: **29.12.2010**
(21) Application number: 10006039.1
(22) Date of filing: 11.06.2010
(51) Int. Cl.: F16B 5/06, B60R 13/02, F16B 19/10, F16B 21/08

(54) **Trim panel retainer assembly**

(30) Priority: 26.06.2009 US 220616 P; 26.05.2010 US 787437
(71) Applicant: Jackson JR, Nicholas, Davisburg MI 48350 (US); Ward, Ryan E., Royal Oak MI 48067 (US)
(72) Inventor: Jackson JR, Nicholas, Davisburg MI 48350 (US); Ward, Ryan E., Royal Oak MI 48067 (US)
(74) Representative: Rüttgers, Joachim

(57) **Abstract**

A retainer assembly (20) comprises a pin (22) including a head and a flange defining a groove (26) therebetween for engaging a first panel (28). A grommet (24) includes a collar (72) encompassing the pin and flexible arms (30) extending from a hinge point at the collar. The assembly is initially in a shipped position wherein the flexible arms extend along the pin and are maintained in a pocket between ribs of the pin. The pin is inserted through a second panel (32) until the collar engages the second panel. The grommet bends at the hinge points allowing the flexible arms to slide out of the pocket and adjustable engage the pin and the second panel until the second panel is maintained in position by the flexible arms, collar, and flange. Upon removing the assembly from the panels, the grommet adjusts back to the shipped position and the assembly is ready for reuse.

## Description

### CROSS REFERENCE TO RELATED APPLICATION

This application claims the benefit of U.S. Application Serial Number 12/787,437 filed May 26, 2010 and U.S. Provisional Application Serial Number 61/220,616 filed June 26, 2009.

### BACKGROUND OF THE INVENTION

1. Technical Field

This present invention is directed to panel retainers, and more particularly, to retainer assemblies for automotive interior applications.

2. Discussion

Retainer assemblies are often used in automotive vehicle interior applications to retain two panels in position relative to one another. For example, the retainer assembly can be used to secure a door trim panel to a supporting metal sheet of the door. Oftentimes existing retainers include a sophisticated two piece design providing for easy separation of the panels. The two pieces can be formed of materials different from one another, with one material being more flexible to accommodate panels of various thicknesses. For example, an existing retainer assembly includes a plastic base having sides extending from a head to a tip and an adjustable metal clip extending along the sides and around the base. The retainer assembly can be inserted into the panels so that the plastic base engages the first panel and the flexible metal clip engages the second panel. However, upon removing the two-piece retainer from the panels, the metal clip and base are pulled apart or separated from one another, which either prevents the retainer assembly from being re-used, or requires re-assembling the retainer assembly. Further, the use of multiple parts separating from one another and multiple materials, such as the plastic base and metal clip, creates significant manufacturing and assembly costs.

### SUMMARY OF THE INVENTION

In view of the above, the need exists for a re-useable retainer assembly for accommodating panels of various thicknesses, which can be efficiently manufactured and assembled. The present invention provides for such an improved retainer assembly. The retainer assembly includes a pin extending longitudinally between a first end and a second end and a grommet encompassing and adjustably engaging the pin. The pin defines a groove for engaging a first panel. The grommet includes a collar encompassing the pin between the groove and the first end and a plurality of flexible arms extending from the collar along the pin toward the first end. The grommet also includes a hinge point between the collar and each of the flexible arms allowing the grommet to bend at the hinge points for allowing the flexible arms to adjustably engage the pin and a second panel.

The retainer assembly can be easily inserted into the two panels. A force is applied to the retainer assembly to engage the first panel by the groove. As the pin is inserted into a hole of the second panel, the grommet slides along the pin toward the second end and bends at the hinge points, allowing the flexible arms to move outwardly and adjust from a shipped position to an assembled position. By bending at the hinge points, the flexible arms of the grommet can engage second panels having a range of thicknesses. The retainer assembly is removed from the panels by applying a force thereto. As the retainer assembly is removed from the second panel, the grommet again bends at the hinge points allowing the flexible arms to move inwardly and the grommet slides along the pin adjusting back to the shipped position. Upon returning to the shipped position, the retainer assembly can be re-used. The grommet and pin remain adjustably engaged to one another before and after inserting the retainer assembly into the two panels, thus reducing manufacturing and assembly costs. The pin and grommet of the retainer assembly can be formed of a single plastic material, which also provides for low manufacturing costs.

### BRIEF DESCRIPTION OF THE DRAWINGS

The present invention will become more fully understood from the detailed description given below, the appended claims, and the accompanying drawings in which:

Figure 1 is perspective view of a first embodiment of the subject invention in a shipped position;

Figure 2 is perspective view of the first embodiment in a first assembled position;

Figure 3 is a side view of the first embodiment in the shipped position;

Figure 4 is a top view of the first embodiment;

Figure 5 is a perspective view of a pin of the first embodiment;

Figure 6A is a side cross sectional view of the first embodiment in the shipped position;

Figure 6B is a side cross sectional view of the first embodiment in the first assembled position;

Figure 6C is a is a side cross sectional view of the first embodiment in a second assembled position;

Figure 7 is perspective view of the grommet of the first embodiment;

Figure 8 is a perspective view of the first embodiment engaging a first panel and aligned with a slot of a second panel;

Figure 9A is a perspective and partial cross sectional view of the first embodiment in the shipped position and aligned with a slot of a second panel;

Figure 9B is a perspective and partial cross sectional view of the first embodiment in the shipped position and disposed in the slot of the second panel;

Figure 9C is a perspective and partial cross sectional view of the first embodiment in the first assembled position and disposed in the slot of the second panel;

Figure 10 is a cross sectional view of the pin and a plurality of teeth of the first embodiment;

Figure 11A is a side cross sectional view of a second embodiment of the subject invention in a shipped position;

Figure 11B is a side cross sectional view of the second embodiment of the subject invention in an assembled position;

Figures 12 is a top view of the second embodiment;

Figures 13A is a cross sectional view of a third embodiment in a shipped position wherein the head of the pin defines a hole;

Figures 13B is a cross sectional view of the third embodiment in an assembled position;

Figure 14 is a top view of the third embodiment;

Figure 15A is a perspective view of the second embodiment in the shipped position; and

Figure 15B is a perspective and partial cross sectional view of the second embodiment in the shipped position.

### DETAILED DESCRIPTION OF THE INVENTION

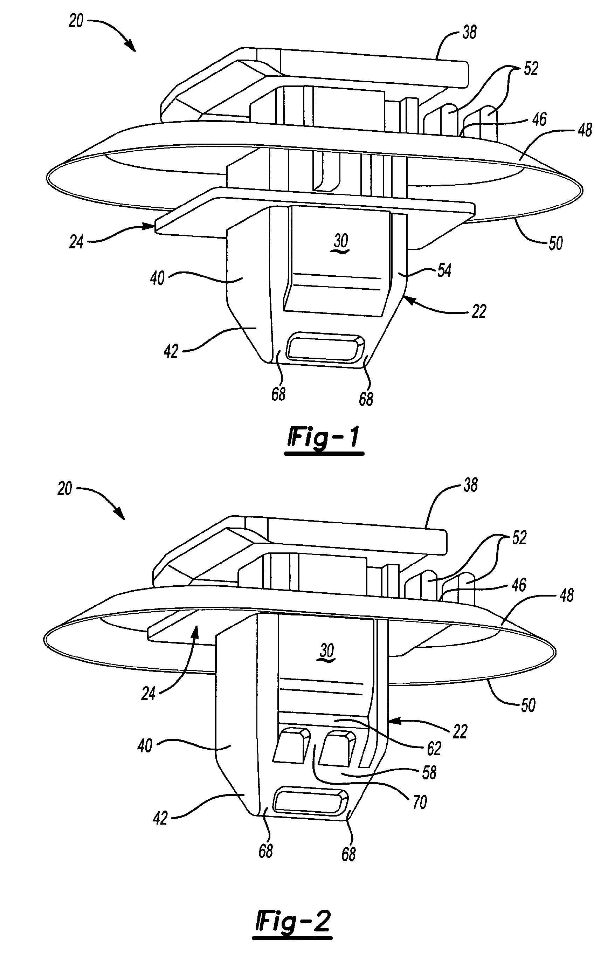

Referring to the Figures, wherein like numerals indicate corresponding parts throughout the several views, a retainer assembly 20 including a pin 22 encompassed by a grommet 24 is generally illustrated in Figures 1 and 2. The pin 22 defines a groove 26 for engaging a first panel 28 and the grommet 24 includes flexible arms 30 for adjustably engaging the pin 22 as the pin 22 passes through a second panel 32. The retainer assembly 20 adjusts from a shipped position, as shown in Figure 1, to an assembled position, as shown in Figure 2, to maintain the first panel 28 and second panel 32 in position relative to one another.

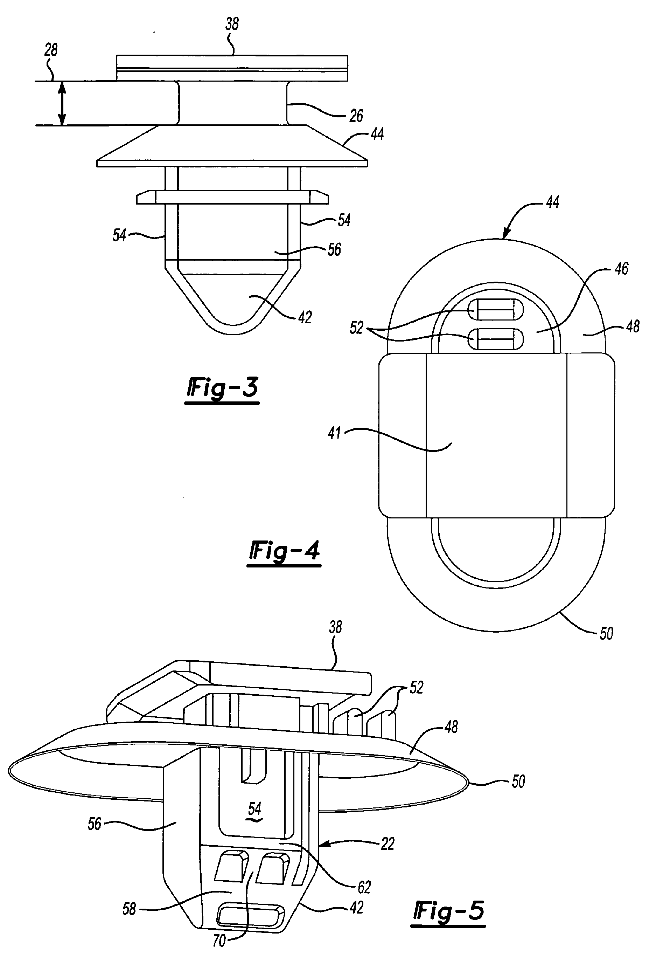

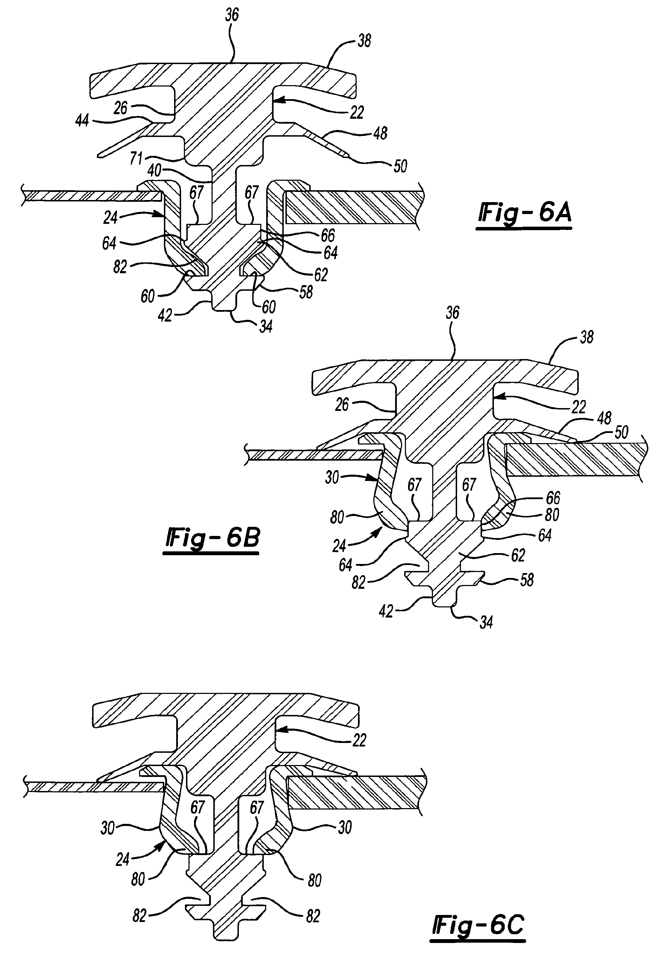

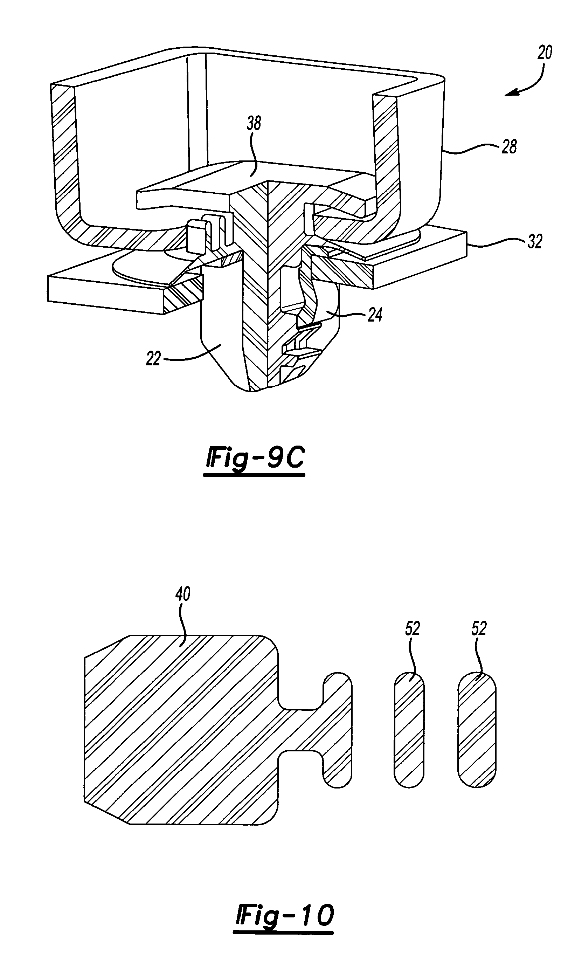

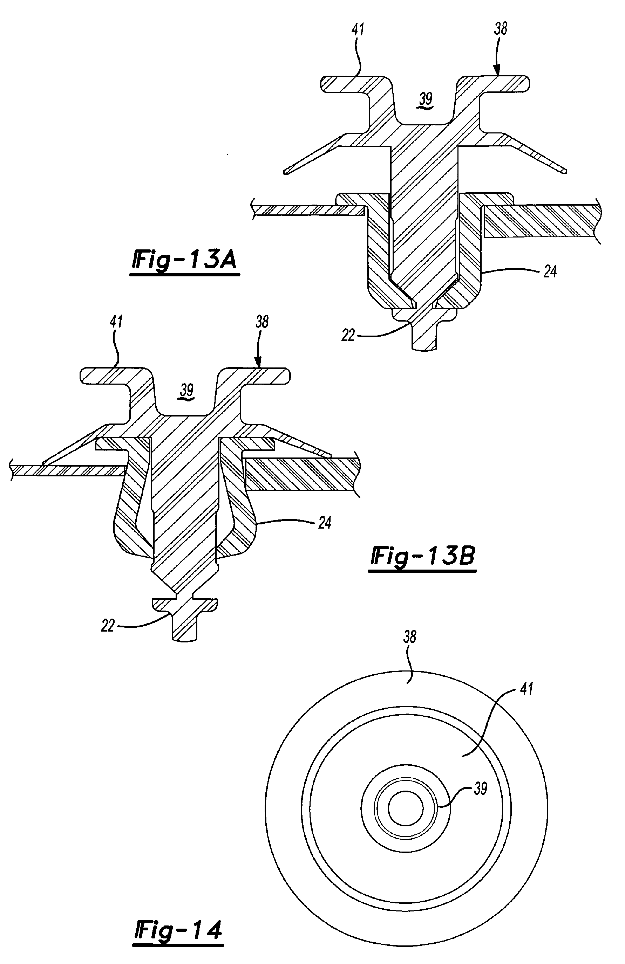

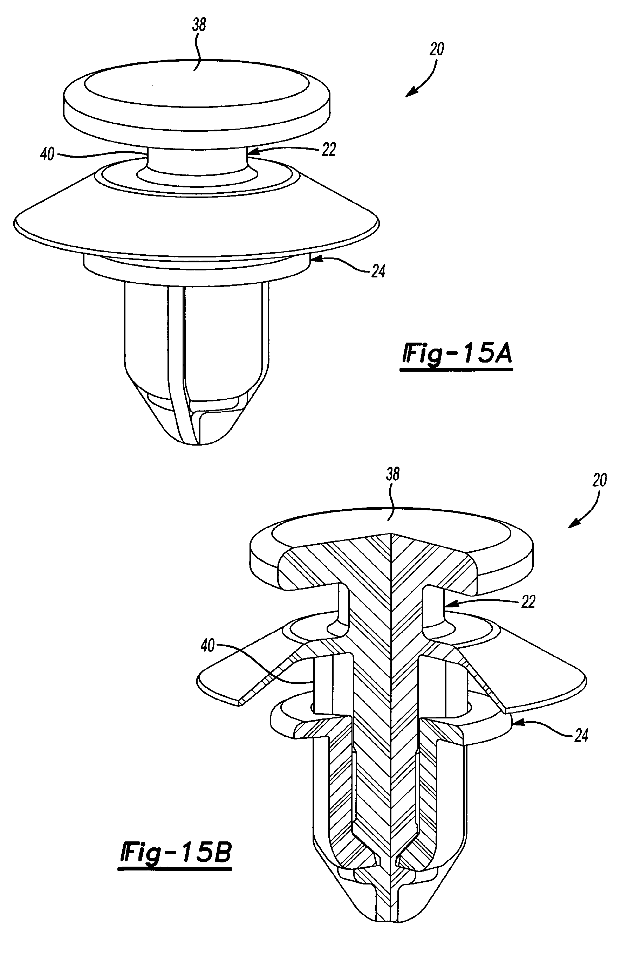

The pin 22 of the retainer assembly 20 extends longitudinally between a first end 34 and a second end 36, as shown in Figures 6A and 6B. The pin 22 includes a head 38 extending radially outwardly from the first end 34 and a shank portion 40 extending transverse to the head 38 and longitudinally from the head 38 to a tip portion 42. The head 38 presents a flat surface 41 at the second end 36, as shown in Figure 4. The width of the tip portion 42 decreases from the shank portion 40 to the second end 36, as shown in Figure 3. In one embodiment, the shank portion 40 of the pin 22 includes a rectangular cross section, as shown in Figure 10. In a second embodiment, the head 38 and shank portion 40 of the pin 22 includes a circular cross section, and the shank portion 40 includes a cylindrical shape, as shown in Figures 15A and 15B. In yet another embodiment, as shown in Figures 13 and 14, the head 38 includes a hole 39 extending into the flat surface 41 at the center of the head 38. The hole 39 of the head 38 allows a user to grasp the head 38 when removing the retainer assembly 20 from the panels 28, 32. Although not shown, in other embodiments the pin 22 includes other cross sectional shapes.

The pin 22 also includes a flange 44 extending radially outwardly from the shank portion 40. The flange 44 presents a flange platform 46 facing and parallel to the head 38 to define the groove 26 between the head 38 and the flange platform 46, as shown in Figures 3 and 4, for engaging and supporting the first panel 28. In one embodiment, the flange platform 46 includes an oval perimeter, as shown in Figure 4. The head 38 and flange platform 46 extend across one another, as shown in Figure 4. The flange 44 also includes an umbrella 48 extending conically outwardly and downwardly from the flange platform 46 away from the head 38 to an umbrella edge 50 for providing a sealing engagement between the umbrella edge 50 and the second panel 32, as shown in Figures 6B and 6C. In one embodiment, a plurality of teeth 52 extend upwardly from the flange platform 46 between the flange 44 and the head 38, as shown in Figures 1, 2, and 4, and 10, for limiting rotation of the retainer assembly 20 relative to the first panel 28 and the second panel 32.

The pin 22 includes a plurality of engagement sides 54 extending between the first end 34 and the flange 44. The engagement sides 54 are spaced from one another about the shank portion 40 by support sides 56, as shown in Figures 3 and 5. In one embodiment, the pin 22 includes a pair of the engagement sides 54 facing opposite one another, as shown in Figures 1, 2, and 3. In another embodiment, the pin 22 includes four engagement sides 54 spaced from one another by the supporting sides 54, 56, as shown in Figures 15A and 15B. Although not shown, in other embodiments the pin 22 can include a different number of engagement sides 54 and support sides 56.

Each of the engagement sides 54 of the pin 22 include a first rib 58 extending transversely from the tip portion 42 adjacent the first end 34 to present a first rib platform 60, as shown in Figures 6A. Each of the engagement sides 54 also include a second rib 62 extending transversely from the shank portion 40 adjacent the tip portion 42. The second rib 62 is disposed between the first rib 58 and the flange 44. The first rib 58 and second rib 62 defme a pocket 82 therebetween for supporting and engaging the grommet 24 when the assembly is in the shipped position, as shown in Figure 6A, which will be discussed further below. Although not shown, in other embodiments the pin 22 includes other configurations for engaging the grommet 24 in the shipped position.

Each of the second ribs 62 of the pin 22 present a locking surface 66 extending longitudinally therealong for engaging the grommet 24 when the retainer assembly is in the first assembled position, as shown in Figure 6B. A locking ledge 64 extends outwardly from the second rib 62 between the locking surface 66 and the pocket 82 for supporting the grommet 24 in the first assembled position, which will be discussed further below. Although not shown, in other embodiments the pin 22 includes other configurations for engaging the grommet 24 in the first assembled position.

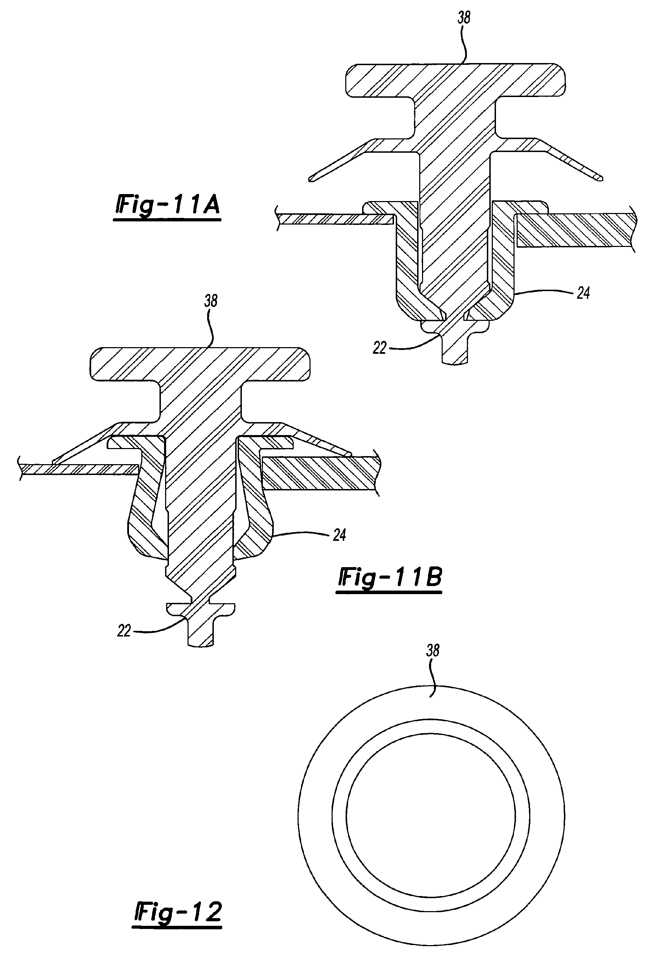

In one embodiment, as shown in Figures 6A, 6B, and 6C, the second rib 62 presents a second rib platform 67 extending transversely from the locking surface 66 inwardly toward the shank portion 40 of the pin 22. The second rib platform 67 supports the grommet 24 in a second assembled position, as shown in Figure 6C. In another embodiment, the locking surface 66 is integral with the shank portion 40 above the locking ledge 64 so that the second rib 62 does not present the second rib platform 67, as shown in Figures 11-15.

In one embodiment, each of the engagement sides 54 include a plurality of first rib supports 68 for supporting the first rib 58, as shown in Figure 2. The first rib supports 68 extend outwardly from the tip portion 42 beneath the first ribs 58, between the second end 36 and the first rib 58. Each of the engagement sides 54 of the pin 22 also include a plurality of second rib supports 70 for supporting the second rib 62, as shown in Figure 5. The second rib supports 70 extend outwardly from the pin 22 beneath the first ribs 58, between the first rib 58 and the second rib 62. Each of the engagement sides 54 also include a plurality of flange supports 71 extending outwardly form the shank portion 40 beneath the flange 44, between the second rib 62 and the flange 44, as shown in Figure 6A, for supporting the flange 44. The supports 68, 70, 71 are integral with the associated ribs 58, 62 and flange 44 as shown in the Figures.

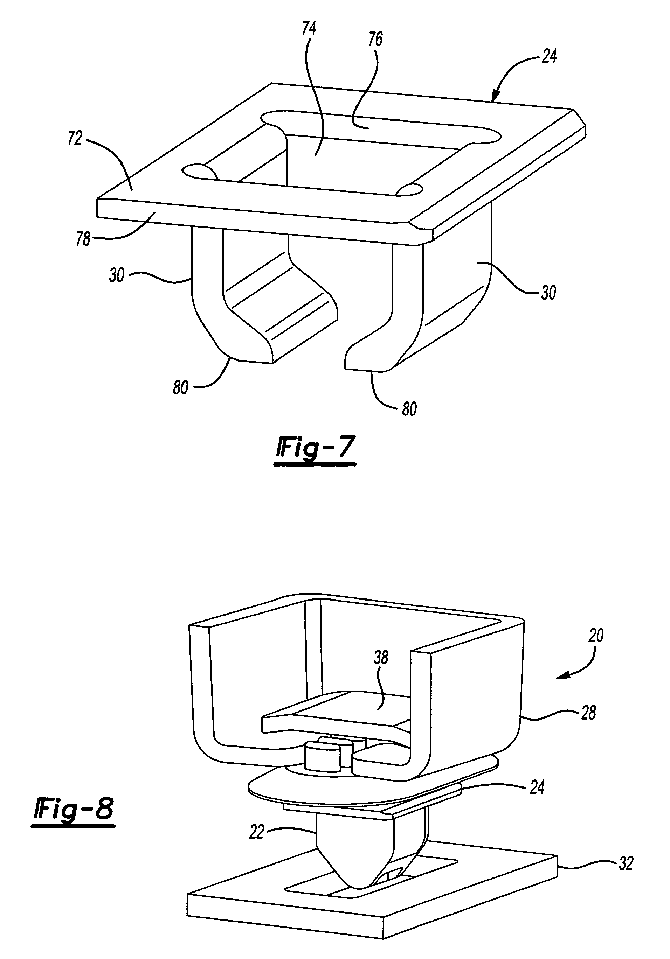

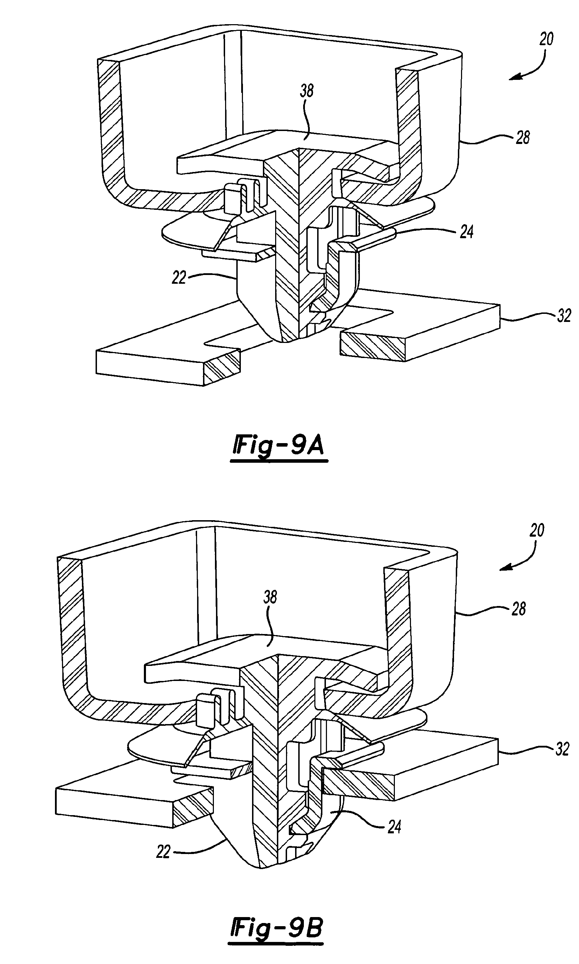

As alluded to above, the grommet 24 adjustably engages and moves along the pin 22 between the shipped position and the assembled position, as shown in Figures 9A-9C. The grommet 24 encompasses the pin 22 and adjustably engages the pin 22 between the flange 44 and the first rib 58. The grommet 24 includes a collar 72 defining a collar opening 74 for encompassing the shank portion 40 of the pin 22. In one embodiment, the collar opening 74 includes a rectangular perimeter, as show in Figure 7. In another embodiment, the collar opening 74 includes a circular perimeter, as shown in Figures 15A and 15B. When the retainer assembly 20 is in the assembled position, the collar 72 of the grommet 24 rests on the second panel 32. The collar 72 extends transverse to the shank portion 40 of the pin 22 and is spaced from and generally parallel to the head 38. The collar 72 extends from an inside edge 76 facing inwardly toward the pin 22 to an outside edge 78 facing outwardly of the pin 22.

The grommet 24 includes a plurality of flexible arms 30 extending downwardly from the inside edge 76 of the collar 72. The flexible arms 30 are spaced from one another by portions of the collar 72. The grommet 24 encompasses the pin 22 so that the flexible arms 30 extend along the engagement sides 54 of the pin 22, as shown in Figures 6A, 6B, 6C and 7 and are spaced from one another by the support sides 56 of the pin 22. Each flexible arm 30 of the grommet 24 extends along one of the engagement sides 54 of the pin 22. The retainer assembly 20 includes an equal number of flexible arms 30 and engagement sides 54.

The flexible arms 30 each include an engagement finger 80 at the end thereof extending inwardly to engage the engagement side 54. As the grommet 24 moves from the shipped position to the assembled position, the engagement fingers 80 travel along the engagement sides 54 of the pin 22. The grommet 24 includes a hinge point between the collar 72 and each of the flexible arms 30. The hinge point has a thickness less than the thickness of the collar 72 and flexible arms 20, allowing the grommet 24 to bend at the hinge point. The hinge point allows the flexible arms 30 to move inwardly toward one another and toward the pin 22 and outwardly away from one another and away from the pin 22.

In one embodiment, as shown in Figure 7, the grommet 24 of the retainer assembly 20 includes two of the flexible arms 30 facing opposite one another and spaced from one another by the support sides 56 of the pin 22. The flexible arms 30 include a generally rectangular shape extending across the shank portion 40 of the engagement sides 54, as shown in Figure 7. In another embodiment, the grommet 24 includes four of the flexible arms 30 spaced from one another by the support sides 56, as shown in Figure 15A. The flexible arms 30 shown in Figures 15A and 15B include a concave shape extending across the shank portion 40 of the engagement sides 54. Although not shown, in other embodiments the grommet 24 includes other configurations adjustably engaging the pin 22 and moving along the pin 22 between the shipped position and the assembled position. The retainer assembly 20, including the pin 22 and grommet 24, is formed of a single material, typically a plastic material, such as acetal, but can be formed of other materials.

As stated above, the retainer assembly 20 is used for retaining two panels 28, 32 in a predetermined position relative to one another. As alluded to above and shown in Figures 8 and 9, the retainer assembly 20 is first disposed in the shipped position, wherein the engagement fingers 80 of the grommet 24 are maintained in the pocket 82 of the pin 22 between the ribs 58, 62. The pin 22 of the retainer assembly 20 engages the first panel 28 at the groove 26 of the pin 22, which is between the head 38 and flange 44. As stated above, the first panel 28 is typically a dog house panel allowing the groove 26 of the pin 22 to be pressed into the open slot of the dog house panel, as show in Figures 8 and 9. The retainer assembly 20 is maintained by a pinch point of the dog house of the first panel 28.

The retainer assembly 20 engaging the first panel is positioned so that the tip portion 42 is aligned with a slot of the second panel 32, as shown in Figure 8. The second panel 32 is typically a sheet metal, as shown in Figures 8 and 9. The tip portion 42 of the pin 22 is inserted through the slot of the second panel 32, followed by the engagement fingers 80 of the grommet 24. After the tip portion 42 passes through the slot, the second panel 32 engages the collar 72 of the grommet 24 and forces the grommet 24 along the shank portion 40 toward the flange 44 as the pin 22 continues to be inserted through the slot of the second panel 32. As the grommet 24 travels upward toward the flange 44, the flexible arms 30 move outwardly away from the pin 22 on the inboard of the second panel 32 until the engagement fingers 80 slide out of the pocket 82 and over the locking ledge 64 and the second panel 32 is secured in position, as shown in Figures 6B and 6C. The second panel 32 is maintained in position by the umbrella 48 of the pin 22 and collar 72 and flexible arms 30 of the grommet 24, as shown in Figures 8 and 9. As alluded to above, the flexible arms 30 move about the hinge point of the grommet 24, both inwardly toward the pin 22 and outwardly away from the pin 22, to accommodate second panels 32 having a range of thicknesses. In one embodiment, the engagement fingers 80 engage the locking surface 66 above the locking ledge 64 while maintaining the second panel 32 in position, as shown in Figure 6B. In another embodiment, the engagement fingers 80 move further along the pin 22 and rest on the second rib platform 67, as shown in Figure 6C.

The retainer assembly 20 is removed from the first panel 28 by applying a horizontal force to the pin 22 so that the groove disengages the dog house. Next, a longitudinal force is applied to the pin 22 so that the engagement fingers 80 disengage from the locking surface 66 and the pin 22 and grommet 24 together are removed from the second panel 32. Upon disengaging the second panel 32, the retainer assembly 20 adjusts from the assembled position back to the shipped position. For example, the head 38 can be pulled upward from the second panel 32. The engagement between the engagement fingers 80 and locking surface 66 is tuned to release at a certain range of extraction force per retainer assembly 20. The force required to remove the retainer assembly 20 from the panels 28, 32 is greater than the force required to insert the retainer assembly 20 into the panels 28, 32. As the pin 22 retracts from the slot of the second panel 32, the grommet 24 slides down the pin 22 and the engagement fingers 80 move inwardly toward the pin 22 and move back into the pockets 82 of the pin 22, as shown in Figure 9A. The engagement fingers 80 of the flexible arms 30 are again maintained in the pockets 82 of the pin 22 and the retainer assembly 20 is ready to be reused for retaining two panels 28, 32. The retainer assembly 20 is undamaged and requires no re-assembly prior to reuse.

The foregoing discussion discloses and describes an exemplary embodiment of the present invention. One skilled in the art will readily recognize from such disclosure, and form the accompanying drawings and claims that various changes, modifications and variations can be made therein without departing from the true spirit and fair scope of the invention as defined by the following claims.

## Claims

1. A retainer assembly (20) for retaining a first panel (28) and a second panel (32) comprising:
a pin (22) extending longitudinally between a first end (34) and a second end (36);
a grommet (24) encompassing and adjustably engaging said pin (22);
said pin (22) defining a groove (26) for engaging a first panel (28);
said grommet (24) including a collar (72) encompassing said pin (22) between said groove (26) and said first end (34);
said grommet (24) including a plurality of flexible arms (30) extending from said collar (72) along said pin (22) toward said first end (34); and
said grommet (24) including a hinge point between said collar (72) and each of said flexible arms (30) allowing said grommet (24) to bend at said hinge points for allowing said flexible arms (30) to adjustably engage said pin (22) and a second panel (32).

2. A retainer assembly (20) as set forth in claim 1 wherein said hinge points have a thickness less than the thickness of said collar (72) and less than the thickness of said flexible arms (30) allowing said grommet (24) to bend at said hinge points for moving said flexible arms (30) of said grommet (24) inwardly toward said pin (22) and outwardly away from said pin (22).

3. A retainer assembly (20) as set forth in claim 1 wherein each of said flexible arms (30) include an engagement finger (80) at the free end thereof extending inwardly for engaging said pin (22).

4. A retainer assembly (20) as set forth in claim 1 wherein said collar (72) extends from an inside edge (76) facing inwardly to an outside edge (78) facing outwardly of said pin (22) and said flexible arms (30) extend from said inside edge (76) toward said first end (34) of said pin (22).

5. A retainer assembly (20) as set forth in claim 1 wherein said pin (22) includes engagement sides (54) spaced from one another by support sides (56) and each of said flexible arms (30) of said grommet (24) extend along one of said engagement sides (54) and is spaced from the adjacent flexible arm (30) by a support side (56).

6. A retainer assembly (20) as set forth in claim 1 wherein said pin (22) and said grommet (24) are formed of a plastic material.

7. A retainer assembly (20) as set forth in claim 1 wherein said pin (22) includes a first rib (58) and a second rib (62) extending outwardly therefrom and defining a pocket (82) therebetween for supporting and engaging said flexible arms (30) of said grommet (24) in a shipped position.

8. A retainer assembly (20) as set forth in claim 7 wherein said pin (22) includes engagement sides (54) presenting said ribs (58, 62) and being spaced from one another by support sides (56) and each of said flexible arms (30) of said grommet (24) extend along one of said engagement sides (54).

9. A retainer assembly (20) as set forth in claim 7 wherein said second rib (62) includes a locking surface (66) extending longitudinally therealong for engaging said flexible arms (30) of said grommet (24) in an assembled position.

10. A retainer assembly (20) as set forth in claim 9 wherein pin (22) includes a locking ledge (64) extending outwardly from said second rib (62) between said locking surface (66) and said pocket (82) for supporting said flexible arms (30) in the assembled position.

11. A retainer assembly (20) as set forth in claim 1 wherein said pin (22) includes a head (38) extending radially outwardly from said second end (36) and a flange (44) extending radially outwardly from said pin (22) between said head (38) and said grommet (24) to define said groove (26) therebetween.

12. A retainer assembly (20) as set forth in claim 11 wherein said pin (22) includes a plurality of teeth (52) extending upwardly form said flange (44) between said flange (44) and said head (38) for limiting rotation of said flange (44) relative to said first panel (28) and said second panel (36).

13. A retainer assembly (20) as set forth in claim 11 wherein said head (38) presents a flat surface (41) at said second end (36) and defines a hole (39) extending from said flat surface (41) toward said first end (34).

14. A retainer assembly (20) as set forth in claim 1 wherein said pin (22) includes a flange (44) between said groove (26) and said grommet (24) extending conically toward said first end (34) and engaging said second panel (32).

15. A retainer assembly (20) as set forth in claim 1 wherein said grommet (24) includes a pair of said flexible arms (30) facing opposite one another.
